# EUROPÄISCHE PATENTANMELDUNG

(11) **EP 1 018 373 A1**
(43) Veröffentlichungstag der Anmeldung: **12.07.2000**
(21) Anmeldenummer: 99630003.4
(22) Anmeldetag: 04.01.1999
(51) Int. Cl.: B03B 9/06

(54) **Verfahren zur Aufbereitung von Abfällen mit Gewinnung von organischem Einsatzmaterial für Zweistufige Entgasungs-/Vergasungssysteme**

(71) Anmelder: R.S.T. Luxembourg S.A., 1930 Luxemburg (LU)
(72) Erfinder: Schmidt, Hans, 38704 Liebenburg (DE)
(74) Vertreter: Weydert, Robert

(57) **Zusammenfassung**

Aufbereitung durch mechanische Vorbehandlung und Trocknung von Abfällen zur Erzielung einer hochaufschließenden Trennfähigkeit des Materials und anschließende Separation der organischen Bestandteile mit Gewinnung einer organischen Grobfraktion (12) und einer organischen Feinfraktion (16,17,18) für den Einsatz in zweistufige Entgasungs-/Vergasungssysteme zur Steigerung von Wirkungsgrad, Durchsatz und Wirschaftlichkeit um ca. den Faktor zwei, durch getrennten Einsatz der organischen Grobfraktion (12) in die Entgasungsstufe und der organischen Feinfraktion (16,17,18) in die Vergasungsstufe unter vorheriger Abtrennung der nichtbrennbaren Abfallbestandteile wie Wasser, Fe-Metalle, NE-Metalle und Mineralien.

## Beschreibung

Die vorliegende Erfindung betrifft ein Verfahren zur Aufbereitung von Abfällen mit Gewinnung von organischem Einsatzmaterial für zweistufige Entgasungs-/Vergasungssysteme,
bei welchen das Abfallmaterial einer mechanischen Vorbehandlung, Trocknung und Separation zur Gewinnung von verschiedenen Fraktionen unterzogen wird.

Solche Verfahren sind beispielsweise in
DE - PS 31 05 597
EP - PS 02 43 747 B1
US - PS 4,623,515
US - PS 4,815,668
beschrieben.

Die bekannten Verfahren sind mit dem Nachteil behaftet, daß die gewonnenen Fraktionen zwar einer allgemeinen Verwertung zur Verfügung stehen, deren Vermarktung sich äußerst schwierig erweist, jedoch für die spezielle Verwertung in zweistufigen Entgasungs-/Vergasungssystemen nicht geeignet sind.

Der vorliegenden Erfindung liegt die Aufgabe zugrunde, ein Verfahren der eingangs erwähnten Arten so weiter zu entwickeln, daß alle organischen Materialanteile mit hoher Trennschärfe separiert und in eine für zweistufige Vergasungsverfahren speziell geeignete Form konditioniert werden.

Die Erfindung geht von der Erkenntnis aus, daß bekannte zweistufige Entgasungs-/Vergasungsverfahren, bestehend aus Pyrolysestufe und Schmelzzyklonstufe, wie beispielsweise das sogenannte PKA-Verfahren, mit um so höherem Wirkungsgrad, Wirtschaftlichkeit und Durchsatzleistung betrieben werden können, je höher die Homogenität und Reinheit des Einsatzmaterials ist. Dieser Effekt kann noch dadurch erhöht werden, daß ein Teil des Einsatzmaterials als Feinmaterial, mit einer Körnung, z.8. kleiner als 10mm, direkt in die Vergasungsstufe eingetragen wird und somit die aufwendigere Entgasungsstufe entlastet wird, d.h. kleiner dimensioniert werden kann.

Die Aufgabe wird erfindungsgemäß dadurch gelöst, daß der Abfall zunächst durch mechanische Vorbehandlung mit den Verfahrensschritten Vorzerkleinerung (2), Magnetabscheidung (3), Sieben (4) und Trocknung (5) derart konditioniert wird, daß eine hochaufschließende Separation in Stoffgruppen möglich wird.
Die Erfindung wird durch die nachstehenden Ausführungen in Verbindung mit der Fließschema-Zeichnung näher erläutert.

Es hat sich in Versuchen gezeigt, daß sich bei dem vorbenannten Verfahrensschritt der Siebung (4), sofern sie mit dem richtigen Sieblochdurchmesser und Sieblochsteg durchgeführt wird, eine weitgehende Abtrennung der Groborganik erzielen läßt.
Diese Groborganik ist relativ homogen, heizwertreich und mit wenig Anorganik behaftet. Sie ist dadurch in idealer Weise als Grob-Brennstoff für den Einsatz in Entgasungsapparaturen (wie z.B. Pyrolyse, Thermolyse usw.) mit hoher Effizienz geeignet.

Der verbleibende Anteil des Abfalls wird nach dem Trocknungsvorgang (5) einer nochmaligen Magnetabscheidung (6) zur Abtrennung von restlichen, nun ohne Adhäsion behafteten Fe-Metallteilen (14) unterzogen. Ebenso wird die Abtrennung der nun durch ohne Adhäsionskräfte partikular verfügbaren NE-Metalle (15) mittels Wirbelstromabscheider (7) durchgeführt.

Der von allen Metallteilen befreite verbleibende Rest wird zum weiteren Aufschluß nachzerkleinert (8). In der nachfolgenden Sichtung (9) oder Absaugung (9) wird die leichte Feinorganik (16) abgetrennt und als Fein-Brennstoll (20) gewonnen.

Die nach der Sichtung (9) oder Absaugung (9) verbleibende Schwerfraktion wird zur weiteren Stoffgruppenauftrennung in zwei oder drei oder mehrere Korngrößen durch Siebung (10) unterteilt. Die dabei anfallende Feinstfraktion (17) kleiner als 1mm oder 2mm wird zusammen mit der vorher abgesaugten Feinorganik (16) dem Fein-Brennstoff (20) zugeordnet.

Die größeren Siebfraktionen, bestehend aus schwerer Feinorganik und Mineralien mit jeweils begrenztem Korngrößenspektrum werden einer Dichtetrennung (11) mittels handelsüblichen Vibrations-Schwerteilauslesern unterzogen. Dabei werden die gegenüber der schweren Organik (wie Nativorganik und Kunststoffen) wesentlich schwereren Mineralien (wie Glas, Keramik, Steine) aufgrund ihrer höheren Stoßimpulsaufnahme sauber von den organischen Partikeln getrennt.

Die abgetrennten Mineralien (19) können z.B. in der Bauindustrie als Recyclingmaterial eingesetzt werden.
Die separierte schwere Feinorganik (18) wird dem Fein-Brennstoff (20) zugeordnet.

Der Fein-Brennstoff (20) ist durch die vorbeschriebene NE-Metallabtrennung (15) in hohem Maße schadstoffentfrachtet und von Fe-Metallen (14), Wasser (13) und Mineralien (19) befreit. In diesem Zustand ist er in idealer Weise zum Einsatz in Vergasungsapparaturen (wie z.B. Schmelzzyklon, Schmelzkammer) mit hoher Effizienz geeignet.

Die mit der Erfindung erzielten Vorteile bestehen insbesondere darin, daß bei dem Aufschluß der Abfälle statt der bei den bekannten Verfahren gewonnenen undefinierten und allgemein schwer verwertbaren Sekundärstoffe, von denen darüberhinaus noch Reststoffe zur Deponierung verbleiben, bei dem erfindungsgemäßen Verfahren vollständig verwertbare Sekundärstoffe (12 - 19) ohne verbleibende Reststoffe gewonnen werden. Die dabei separierten Grob-Brennstoffe (21) und Fein-Brennstoffe (20) sind definiert, homogen, heizwertreich, schadstoffentfrachtet, trocken, lager- und transportfähig.

Mit diesen Eigenschaften der Brennstoffe können Entgasungs- und Vergasungsprozesse mit hoher Effizienz betrieben und die Investitionskosten halbiert werden.

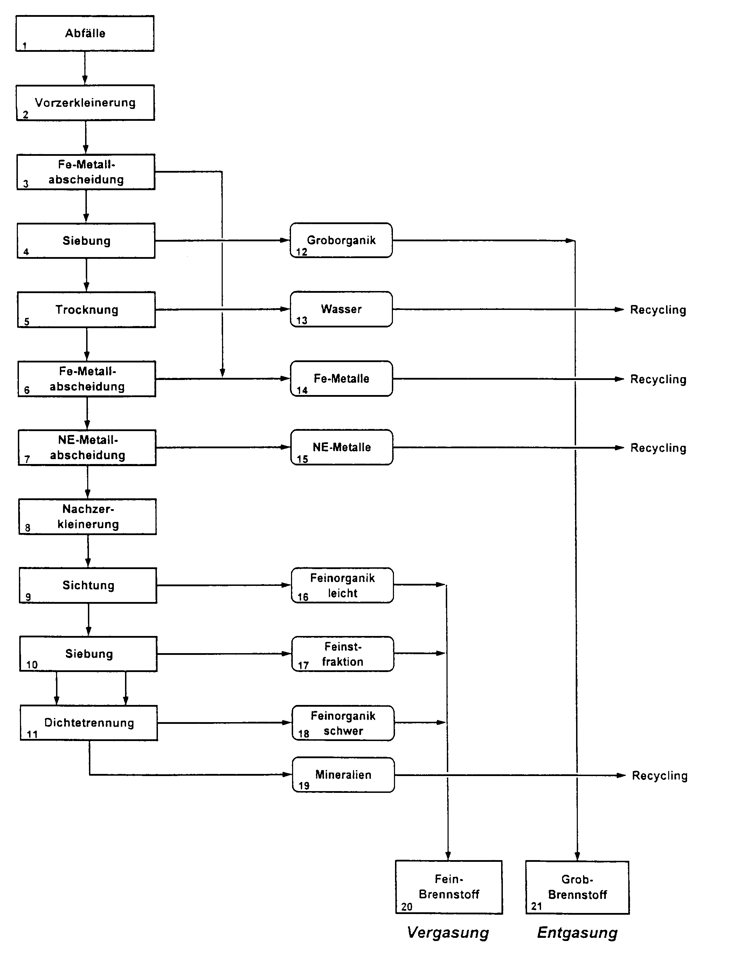

## Patentansprüche

1. Verfahren zur Aufbereitung von Abfällen mit Gewinnung von organischem Einsatzmaterial für zweistufige Entgasungs-/Vergasungssysteme, dadurch gekennzeichnet, daß die einzusetzenden Abfälle mittels mechanischer Vorbehandlung und Trocknung hochaufschließend separierbar gemacht und anschließend die organischen Anteile in eine Grobfraktion von 60 - 150 mm und eine Feinfraktion von 0 - 10 mm unterteilt, von den anorganischen Anteilen und Metallen separiert werden und die organische Grobfraktion in einer Entgasungsstufe (z.B. Pyrolyse) und die organische Feinfraktion in einer Vergasungsstufe (z.B. Schmelzzyklon) zu Nutzgas umgesetzt werden.

2. Verfahren nach Anspruch 1, dadurch gekennzeichnet, daß die mechanische Vorbehandlung , Trocknung und Separation in sequentieller Reihenfolge mit - Vorzerkleinerung - Magnetabscheidung - Siebung - Trocknung - Magnetabscheidung - Wirbelstromabscheidung - Nachzerkleinerung - Sichtung - Siebung - Dichtetrennung - abläuft und dadurch die anorganischen Stoffe sowie Fe-Metalle, NE-Metalle und Wasser mit hoher Trennschärfe separiert werden und damit direkt stofflich verwertbar sind.

3. Verfahren nach Anspruch 1 und 2, dadurch gekennzeichnet, daß die thermische Energie für die Trocknung des Materials aus der Abwärme der Entgasungsstufe und/oder der Vergasungsstufe gewonnen wird.

4. Verfahren nach Anspruch 1 bis 3, dadurch gekennzeichnet, daß das erforderliche Betriebswasser des nachgeschalteten Entgasungs-/Vergasungssystems und/oder der Gasreinigungseinrichtung durch Kondensation aus dem verdampften Wasser der Trocknungsstufe gewonnen wird.
